# EUROPÄISCHE PATENTSCHRIFT

(11) **EP 1 640 669 B1**
(45) Veröffentlichungstag und Bekanntmachung des Hinweises auf die Patenterteilung: **21.12.2011**
(21) Anmeldenummer: 05077115.3
(22) Anmeldetag: 16.09.2005
(51) Int. Cl.: F24D 19/10

(54) **Raumbeheizungseinrichtung**
Space heating device
Appareil de chauffage de locaux

(30) Priorität: 24.09.2004 DE 102004046689
(43) Veröffentlichungstag der Anmeldung: 29.03.2006
(73) Patentinhaber: Danfoss A/S, 6430 Nordborg (DK)
(72) Erfinder: Jørgensen, Lasse, 8600 Silkeborg (DK); Dam, Lars, 6000 Kolding (DK); Hansen, Jesper Bruhn, 6760 Ribe (DK)
(74) Vertreter: Knoblauch, Andreas

(56) Entgegenhaltungen:
- EP-A- 0 158 093
- EP-A1- 1 384 978
- DE-A1- 3 423 731
- DE-A1- 10 057 360
- JP-A- 5 066 024
- PATENT ABSTRACTS OF JAPAN Bd. 2002, Nr. 04, 4. August 2002 (2002-08-04) & JP 2001 343133 A (SANYO ELECTRIC CO LTD; SANYO ELECTRIC AIR CONDITIONING CO LTD), 14. Dezember 2001 (2001-12-14)
- PATENT ABSTRACTS OF JAPAN Bd. 011, Nr. 102 (M-576), 31. März 1987 (1987-03-31) & JP 61 250424 A (MITSUBISHI HEAVY IND LTD; others: 01), 7. November 1986 (1986-11-07)

## Beschreibung

Die Erfindung betrifft eine Raumbeheizungseinrichtung mit einem beheizbaren Fußboden, der eine Fußbodenheizeinrichtung aufweist, und einem Raumthermostaten, der einen Raumluftsensor aufweist und mit einer Stelleinrichtung der Fußbodenheizeinrichtung verbunden ist, wobei der Raumthermostat einen Oberflächentemperatursensor aufweist, der eine Temperatur an der Oberfläche des Fußbodens über einen Abstand hinweg ermittelt.

Eine derartige Raumbeheizeinrichtung ist beispielsweise aus EP 1 384 978 A1 bekannt. Die dort offenbarte Raumbeheizungseinrichtung weist einen beheizbaren Fußboden und einen Raumthermostaten auf. Der Raumthermostat weist einen Raumluftsensor und einen Oberflächentemperatursensor auf. In den Raumthermostaten ist ein Regelelement integriert. Der Raumthermostat ist an einer Wand des Raumes angeordnet und misst mithilfe des Oberflächentemperatursensors eine Temperatur an der Oberfläche des Fußbodens über einen Abstand hinweg. Der Oberflächentemperatursensor kann dabei als Infrarotsensor ausgebildet sein. Eine Stelleinrichtung für die Fußbodenheizung des beheizbaren Fußbodens ist nicht direkt offenbart. Allerdings ist angedeutet, dass eine Leitung vom Raumthermostaten durch einen Kanal in der Mauer nach unten geführt wird. Es ist daher anzunehmen, dass der Raumthermostat über die Leitung mit einer Stelleinrichtung der Fußbodenheizeinrichtung verbunden ist.

Eine weitere Raumbeheizungseinrichtung ist beispielsweise aus der Firmendruckschrift "Wireless regulation for floor heating" der Danfoss A/S, Nr. VD.78.K3.02, Januar 2002, bekannt. Der Raumthermostat mißt die Raumtemperatur und beeinflußt in Abhängigkeit von der Raumtemperatur die Fußbodenheizeinrichtung, so daß die Temperatur der Raumluft im wesentlichen konstant gehalten werden kann.

Aus JP 2001 343 133 A ist ein Verfahren zum Steuern einer Raumtemperatur bekannt, wobei sowohl die Fußbodentemperatur als auch die Raumtemperatur berücksichtigt werden. Dabei wird die Temperatur des Raumes über einen Raumluftsensor und die Temperatur des Fußbodens über einen Fußbodentemperatursensor erfasst. Bis zum Erreichen einer gewünschten Raumtemperatur erfolgt die Regelung der Heizleistung unter hauptsächlicher Berücksichtigung der Daten des Raumluftsensors. Anschließend erfolgt eine Regelung der Fußbodentemperatur, wobei die Raumlufttemperatur in einem größeren Bereich schwanken darf.

Eine Fußbodenheizeinrichtung kann unterschiedliche Ausgestaltungen haben. Üblich sind beispielsweise Fußbodenheizeinrichtungen, die mit einem Wärmeträgermedium, beispielsweise heißem Wasser, arbeiten. In diesem Fall beeinflußt die Stelleinrichtung den Durchfluß dieses Wärmeträgermediums durch den Fußboden. Der Fußboden wirkt dann als Wärmetauscher, der die Wärme aus dem Wärmeträgermedium an die Raumluft abgibt.

In einer anderen Ausgestaltung kann die Fußbodenheizeinrichtung elektrisch arbeiten. Zu diesem Zweck sind dann Widerstands-Heizelemente in den Fußboden eingelassen. Die Stelleinrichtung beeinflußt dann den Strom, der durch die Widerstands-Heizelemente fließt. Auch in diesem Fall gibt der Fußboden die erhöhte Temperatur, die in den Widerstands-Heizelementen durch den fließenden Strom erzeugt wird, an die Raumluft ab.

Für viele Menschen ist eine Raumbeheizung über den Fußboden sehr angenehm. Allerdings ergeben sich bei einer Fußbodenheizung Probleme, die man bei Radiatoren, also Heizkörpern, nicht hat. In Abhängigkeit von der Art des verwendeten Fußbodens ist es wichtig, die Fußbodentemperatur unter Kontrolle zu haben. Wenn es sich beispielsweise um einen Holzfußboden handelt, muß man die Temperatur begrenzen, um ein Austrocknen des Holzes und eine nachfolgende Beschädigung des Fußbodens zu vermeiden. Umgekehrt möchte man bei einem Fußboden, der mit Klinkern, Steinen oder Fliesen belegt ist, eine Mindesttemperatur einhalten, damit ein Benutzer keine "kalten Füße" bekommt.

Um die Fußbodentemperatur zu ermitteln, kann man einen Temperatursensor in den Fußboden einbauen. Hier sieht man in vielen Fällen einen Hohlraum vor, beispielsweise ein Rohr, in dem der Temperatursensor angeordnet werden kann. Allerdings ergeben sich bei einer derartigen Anordnung einige Regelungsprobleme. Aufgrund der Trägheit des Fußbodens ergeben sich Verzögerungen bei der Messung, so daß eine Regelung zu spät erfolgt, was zu einem Überschwingen führt. Außerdem muß die Position des Temperatursensors im Fußboden sehr sorgfältig gewählt werden, weil später die Einrichtung des Raumes einen Einfluß auf die gemessene Temperatur haben kann. Wenn beispielsweise ein Schrank genau über dem Temperatursensor angeordnet wird, dann wird der Schrank Wärme zum Fußboden zurück reflektieren, was die Messung der Fußbodentemperatur beeinflußt.

Der Erfindung liegt die Aufgabe zugrunde, die Temperatursteuerung in einem Raum zu verbessern.

Diese Aufgabe wird bei einer Raumbeheizungseinrichtung der eingangs genannten Art dadurch gelöst, daß der Raumthermostat 18-20 eine Minimal-/Maximalwert-Auswahleinrichtung für die Oberflächentemperatur aufweist, wobei einräumt als dem Raumluftsensor der Raumthermostat dem Oberflächentemperatursensor eine höhere Priorität beim Einwirken auf die Stelleinrichtung.

Mit anderen Worten ist der Einfluß des Oberflächentemperatursensors auf die Stelleinrichtung größer als der Einfluß des Raumluftsensors. Damit trägt man der Forderung Rechnung, daß die Temperatur des Fußbodens eine entscheidende Größe bei der Beeinflussung der Stelleinrichtung ist.

Bei dem Oberflächentemperatursensor handelt es sich also um einen "Fernfühler", der mit Abstand zum Fußboden angeordnet werden kann. Praktisch alle Probleme, die mit der Einbettung des Temperatursensors in den Fußboden zusammenhängen, werden damit eliminiert. Darüber hinaus faßt man den Raumthermostaten mit dem Oberflächentemperatursensor zusammen, so daß man eine kompakte Baueinheit erhält. Diese Baueinheit ist nur unwesentlich oder gar nicht größer als ein herkömmlicher Raumthermostat, so daß für den Benutzer des Raumes praktisch keine Änderungen zu bemerken sind. Gleichzeitig wird auch die Kommunikation zwischen der Stelleinrichtung und den einzelnen Sensoren, also dem Raumluftsensor und dem Oberflächentemperatursensor, vereinfacht. Wenn diese beiden Sensoren räumlich benachbart angeordnet sind, ist es möglich, mit einer einzigen Übertragungsstrecke zur Stelleinrichtung auszukommen. Die Anordnung des Raumthermostaten muß lediglich so gewählt werden, daß der Raumthermostat einerseits die Raumlufttemperatur ermitteln kann, andererseits aber auch die Oberflächentemperatur des Fußbodens. Bei der Gestaltung des Raumes ist man wesentlich freier, weil die baulichen Maßnahmen, die man zur Anordnung des Oberflächentemperatursensors treffen muß, wesentlich weniger aufwendig sind als bei der Einbettung des Temperatursensors in den Fußboden.

Da der Raumthermostat eine Minimal-/Maxialmalwert-Auswahleinrichtung für die Oberflächentemperatur aufweist, kann man auswählen, ob man die Fußbodentemperatur auf einen Minimalwert oder einen Maximalwert begrenzen möchte. Wenn man beispielsweise einen Fußboden mit einer Oberfläche aus Holz hat, dann möchte man die Temperatur auf maximal 25°C einstellen. Wenn man nun annimmt, daß die Raumtemperatur 26°C betragen soll und die Fußbodentemperatur auf 25° eingestellt wird, dann wird die Fußbodenheizeinrichtung so lange Wärme zuführen, bis die Fußbodentemperatur 25°C erreicht. Auch wenn die Raumtemperatur geringer ist und beispielsweise nur 24°C beträgt, beispielsweise wegen eines offenen Fensters, wird keine Wärme mehr zugeführt, weil die Fußbodentemperatur die maximale Grenze bildet. Wenn man umgekehrt zur Vermeidung von kalten Füßen die Temperatur eines Klinkerfußbodens im Badezimmer auf mindestens 27°C einstellt und gleichzeitig die Raumtemperatur auf einen geringeren Wert von beispielsweise 23°C, dann wird die Fußbodenheizeinrichtung nur dann abgeschaltet, wenn die Fußbodentemperatur gleichzeitig mindestens 27°C beträgt. Dies gilt auch dann, wenn die Raumtempe-ratur über ihren Sollwert hinaus angestiegen ist, weil beispielsweise die Sonne in den Raum scheint.

Vorzugsweise ist der Oberflächentemperatursensor als Infrarotsensor ausgebildet. Mit Hilfe eines Infrarotsensors läßt sich auch über eine gewisse Entfernung die Temperatur der Oberfläche des Fußbodens relativ genau ermitteln. Ein derartiger Infrarotsensor ist beispielsweise aus DE 297 16 166 U1 bekannt. Allerdings wird dort nicht die Temperatur in einem geschlossenen Raum geregelt, wie dies erfindungsgemäß der Fall sein soll.

Vorzugsweise ist der Raumthermostat leitungslos mit der Stelleinrichtung verbunden. Man ist also nicht auf die Montage von Leitungen angewiesen, um die Kommunikation zwischen dem Raumthermostaten und der Stelleinrichtung sicherzustellen. Die leitungslose Verbindung kann vielmehr über elektromagnetische Wellen, beispielsweise Funk oder Licht, erfolgen. Damit ist man bei der Anordnung eines Raumthermostaten in einem Raum noch flexibler, d.h. man kann sehr schnell auf Veränderungen der Einrichtung reagieren. Es ist lediglich erforderlich, daß der Oberflächentemperatursensor den Fußboden "sieht", also eine Messung auch über eine gewisse Entfernung vornehmen kann.

Vorzugsweise ist der Raumthermostat in einer Höhe im Bereich von 1,2 m bis 1,8 m über dem Fußboden angeordnet. In dieser Höhe hat der Raumthermostat die Möglichkeit, die Raumlufttemperatur einerseits und die Oberflächentemperatur des Fußbodens andererseits mit einer ausreichenden Zuverlässigkeit zu ermitteln, so daß die Temperatursteuerung des Raumes mit der notwendigen Zuverlässigkeit bewirkt werden kann.

Vorzugsweise ist der Raumthermostat in einer Entfernung von maximal 0,3 m von einer Wand angeordnet. Damit stört er wenig bei der Einrichtung des Raumes.

Vorzugsweise ermittelt der Raumthermostat die Oberflächentemperatur in zeitlichen Abständen. Insbesondere dann, wenn der Raumthermostat leitungslos mit der Stelleinrichtung verbunden ist, möchte man auch keine Leitungen zur Energieversorgung des Raumthermostaten vorsehen. Der Raumthermostat wird also mit Batterien versorgt. Diese sollten solange wie möglich halten. Wenn man die Oberflächentemperatur des Fußbodens nur von Zeit zu Zeit ermittelt, ist auch nur von Zeit zu Zeit elektrische Energie für diesen Vorgang erforderlich. Die Intervalle, in denen die Oberflächentemperatur ermittelt wird, können fest vorgegeben sein. Sie können aber auch vom Benutzer frei gewählt werden. Schließlich ist es auch möglich, diese Intervalle durch einen Zufallsgenerator erzeugen zu lassen.

Hierbei ist bevorzugt, daß der Raumthermostat Werte der Oberflächentemperatur nur dann an die Stelleinrichtung weiterleitet, wenn eine Änderung einen vorbestimmten Wert übersteigt. Ein relativ großer Verbrauch von elektrischer Energie tritt dann ein, wenn die Daten vom Raumthermostaten an die Stelleinrichtung gesendet werden müssen. Dieses Senden wird also nur dann vorgenommen, wenn es unbedingt erforderlich ist. Erforderlich ist es nur dann, wenn sich Werte der Oberflächentemperatur so geändert haben, daß die Stelleinrichtung eingreifen muß, um einen gewünschten Zustand beizubehalten oder wieder zu erreichen.

Hierbei kann von Vorteil sein, daß der Raumthermostat Werte der Oberflächentemperatur nur dann an die Stelleinrichtung weiterleitet, wenn sich ein Mittelwert der Oberflächentemperatur über einen vorbestimmten Zeitraum um mehr als ein vorbestimmtes Maß ändert. Beispielsweise kann man in einem Zeitraum von 15 bis 30 Minuten vier Messungen durchführen. Nur wenn der Mittelwert ansteigt oder abfällt, wird diese Änderung an die Stelleinrichtung weitergeleitet. Damit werden kurzfristige Einflüsse, die beispielsweise durch Sonneneinstrahlung, Menschen oder Tiere im Raum verursacht werden können, so abgefedert, daß sie keinen zusätzlichen Energieverbrauch zur Folge haben.

Die Erfindung wird im folgenden anhand eines bevorzugten Ausführungsbeispiels in Verbindung mit der Zeichnung beschrieben. Hierin zeigen:
- Fig. 1: eine schematische Darstellung eines Heizungssystems mit mehreren Räumen und
- Fig. 2: eine schematische Darstellung einer Raumbeheizungseinrichtung.

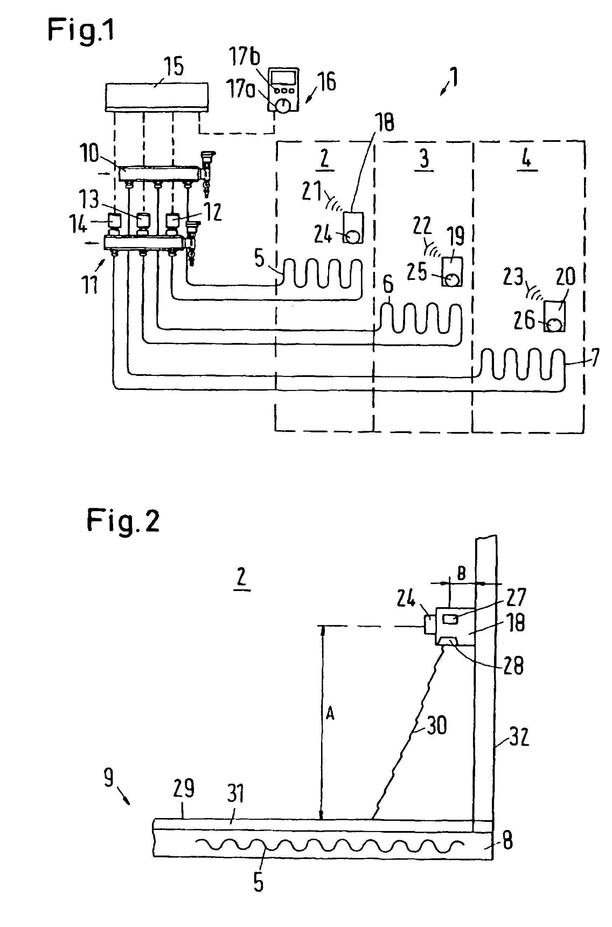

Fig. 1 zeigt in schematischer Darstellung ein Heizungssystem 1 mit drei Räumen 2, 3, 4, von denen jeder mit einer Fußbodenheizeinrichtung 5-7 ausgestattet ist. Die Fußbodenheizeinrichtung 5-7 ist im vorliegenden Fall jeweils als Heizschlange ausgebildet, d.h. als mäanderförmig geführte Leitung, die im Estrich 8 (Fig. 2) eines Fußbodens 9 verlegt ist. Durch diese Fußbodenheizeinrichtungen 5-7 fließt dann eine Wärmeträgerflüssigkeit, beispielsweise heißes Wasser.

Die Versorgung der Fußbodenheizeinrichtungen 5-7 mit der Wärmeträgerflüssigkeit erfolgt über einen Eingangsverteiler 10, an den die Fußbodenheizeinrichtungen 5-7 angeschlossen sind. Die Steuerung der die Fußbodenheizeinrichtungen 5-7 durchfließenden Wärmeträgerflüssigkeit erfolgt über ein Steuermodul 11, an das die Fußbodenheizeinrichtungen 5-7 angeschlossen sind. Das Steuermodul 11 weist für jede Fußbodenheizeinrichtung ein steuerbares Ventil 12-14 auf. In Abhängigkeit von dem vom Ventil 12-14 freigegebenen Öffnungsgrad fließt eine größere oder kleinere Strömungsmenge des Wärmeträgermittels durch die Fußbodenheizeinrichtungen 5-7.

Das Steuermodul 11 wird über eine Steuereinrichtung 15 angesteuert. Die Steuereinrichtung 15 ist mit einer Zonensteuerung 16 verbunden, an der über Einstellelemente 17a, 17b bestimmte Parameter eingestellt werden können, die für das gesamte Heizungssystem 1 gelten sollen.

Jeder Raum 2-4 weist einen Raumthermostaten 18-20 auf, der über eine leitungslose Verbindung 21-23 mit der Steuereinrichtung 15 kommuniziert und unter anderem die aktuelle Raumtemperatur, d.h. die Temperatur der Raumluft, an die Steuereinrichtung 15 weitermeldet. Über eine Einstelleinrichtung 24-26 läßt sich für jeden Raum 2-4 eine Solltemperatur der Raumluft vorgeben. Die Zonensteuerung 16 kann zum Programmieren der Steuereinrichtung 15 verwendet werden.

Wie aus Fig. 2 zu erkennen ist, weist jeder Raumthermostat 18 neben der Einstelleinrichtung 24 auch einen Raumluftsensor 27 auf, mit dem die Temperatur der Raumluft ermittelt werden kann. Zusätzlich weist jeder Raumthermostat auch noch einen Oberflächentemperatursensor 28 auf, mit dessen Hilfe die Temperatur an der Oberfläche 29 des Fußbodens 9 ermittelt werden kann. Der Oberflächentemperatursensor 28 ist beispielsweise als Infrarotsensor ausgebildet, der die von der Oberfläche 29 ausgehende Wärmestrahlung 30 empfängt. Hierzu ist es lediglich erforderlich, daß der Oberflächentemperatursensor 28 die Oberfläche 29 "sieht", d.h. eine strahlungsmäßige Verbindung möglich ist.

Dadurch, daß man die Temperatur des Fußbodens 9 direkt an der Oberfläche 29 ermittelt, erreicht man eine schnellere Reaktion der Fußbodenheizung. Wenn beispielsweise Sonnenlicht auf die Oberfläche 29 gelangt, dann wird sich dort eine erhöhte Temperatur ergeben, die man bei der Versorgung der Fußbodenheizeinrichtungen 5-7 beachten kann. Das gleiche gilt bei Wasser auf dem Fußboden, wenn beispielsweise eine Person aus einer Badewanne oder einer Dusche heraussteigt. Bisher war es hier notwendig, das zuerst eine Verdampfung erfolgen mußte, die eine Abkühlung des Fußbodens zur Folge hatte, die dann den im Fußboden eingebauten Sensor erreichen sollte. Bei der hier vorgestellten Lösung wird das Wasser durch den Oberflächentemperatursensor 28 sofort erfaßt, und eine entsprechend schnelle Reaktion ist möglich.

Die Temperatur, die an der Oberfläche 29 des Fußbodens 9 gewünscht ist, hängt unter anderem von einem Belag 31 ab, der die Oberfläche des Fußbodens 8 bildet.

Wenn der Belag 31 aus Holz gebildet ist, dann möchte man eine vorbestimmte Temperatur nicht überschreiten, um ein Austrocknen des Holzfußbodens zu vermeiden. Beispielsweise sollte die Temperatur an der Oberfläche 29 nicht über 29°C ansteigen.

Wenn es sich bei dem Belag 31 hingegen um Klinker oder Fliesen handelt, dann möchte man eine bestimmte Mindesttemperatur von beispielsweise 25° oder 27°C einstellen, damit ein Benutzer keine "kalten Füße" bekommt, wenn er auf der Oberfläche 29 des Fußbodens 8 herumläuft.

Dementsprechend wertet der Raumthermostat 18 nicht nur die Signale des Raumluftsensors 27 aus, sondern auch die Signale des Oberflächentemperatursensors 28. Hierbei kann der Benutzer entscheiden, ob er einen vorbestimmten Mindestwert der Oberflächentemperatur oder einen vorbestimmten Maximalwert der Oberflächentemperatur einstellen möchte. Wie oben ausgeführt, wird man beispielsweise bei einem Holzfußboden einen Maximalwert einstellen, der nicht überschritten werden soll, während bei einem Klinkerfußboden eine vorbestimmte Mindesttemperatur eingestellt wird.

Erfindungsgemäß wird dafür gesorgt, daß die Ausgangssignale des Oberflächentemperatursensors 28 mit einer höheren Priorität behandelt werden als die Ausgangssignale des Raumluftsensors 27. Diese Einstellung kann bereits im Raumthermostat 18 vorgenommen werden, der dann bevorzugt die Signale an die Zonensteuerung 16 sendet, die vom Oberflächentemperatursensor 28 stammen. Man kann diese Prioritierung aber auch in der Zonensteuerung 16 oder sogar in der Steuereinrichtung 15 vornehmen. Die Zonensteuerung 16 bildet zusammen mit der Steuereinrichtung 15 und dem Steuermodul 11 eine Stelleinrichtung, die auf die Fußbodenheizung einwirkt.

Die Priorität kann kurz wie folgt erläutert werden: Wenn man einen Belag 31 aus Holz hat und die Soll-Raumtemperatur auf 26°C und die maximale Fußbodentemperatur auf 25°C einstellt, dann wird die Heizeinrichtung 5 so lange mit Wärme versorgt, bis die Fußbodentemperatur 25°C erreicht. Dies wird mit Hilfe des Oberflächentemperatursensors 28 ermittelt. Wenn die Raumtemperatur nun auf 24°C absinkt, weil beispielsweise ein Fenster geöffnet wird, wird dennoch keine Wärme mehr zugeführt, weil die Temperatur des Fußbodens 9 die Grenze bildet. Wenn man hingegen einen Belag 31 aus Klinker hat, dessen Temperatur mindestens 27°C betragen soll, und gleichzeitig die Raumtemperatur auf 23°C eingestellt wird, dann wird die Wärmeversorgung nur abgeschaltet, wenn die Temperatur an der Oberfläche 29 des Fußbodens 9 mindestens 27°C beträgt, und zwar auch dann, wenn beispielsweise durch eine erhöhte Sonneneinstrahlung oder mehrere Menschen im Raum die Raumtemperatur die vorgegebenen 23°C überschritten ist.

Der Raumthermostat 18 wird in einer Höhe A im Bereich von 1,2 bis 1,8 m über dem Fußboden 9 montiert. Er hat dabei eine Entfernung von maximal 0, 3 m von einer Wand 32, an der er montiert ist.

Dadurch, daß der Raumthermostat 18 leitungslos mit der Zonensteuerung 16 kommuniziert, ist das Heizungssystem 1 nicht nur sehr flexibel. Man kann prololemlos auf Änderungen der Einrichtung eines jeden Raumes 2-4 reagieren. Auch ist ein derartiges System servicefreundlich, weil ein Verbraucher leicht feststellen kann, ob ein Raumthermostat 18 fehlerbehaftet ist oder nicht. Typischerweise hat man in einem derartigen Heizungssystem 1 mehrere Raumthermostaten 18-20, und man kann einen anderen Raumthermostaten 18-20 verwenden um festzustellen, ob nur der einzelne Raumthermostat oder das ganze System einen Fehler hat. Wenn man beispielsweise feststellen möchte, ob die Übertragungsstrecke zwischen dem Raumthermostat 18 und der Steuereinrichtung 15 funktioniert, dann kann man beispielsweise eine Leuchtdiode und einen Knopf verwenden, der am Raumthermostat 18 vorgesehen ist. Beides ist hier aus Gründen der Übersichtlichkeit nicht dargestellt. Wenn man den Knopf drückt, dann leuchtet die Diode auf, und der Raumthermostat 18 wird versuchen, mit der Steuereinrichtung 15 in Verbindung zu treten. Wenn eine Kommunikation zwischen diesen beiden Einheiten möglich ist, wird die Diode ausgeschaltet. Der Benutzer kann dann sofort erkennen, ob eine Verbindung zustande gekommen ist oder nicht.

Bei einer leitungslosen Kommunikation zwischen dem Raumthermostaten 18-20 und der Zonensteuerung 16 wird jeder Raumthermostat 18-20 über Batterien mit der notwendigen elektrischen Leistung versorgt. Um eine möglichst lange Lebensdauer der Batterien zu gewährleisten, ist es von Vorteil, wenn die Raumthermostaten 18-20 nicht dauernd Messungen vornehmen und Daten senden.

Man sieht deswegen vor, daß eine Messung der Oberflächentemperatur nur in Abständen vorgenommen wird. Diese Abstände können fest vorgegeben oder wahlfrei sein. Man kann sie auch durch einen Zufallsgenerator erzeugen. Wenn die gemessene Temperatur der Oberfläche 31 keine großen Variationen aufweist, dann werden keine Daten an die Zonensteuerung 16 gesendet. Auch kann man plötzliche Temperaturänderungen, die sich beispielsweise durch eine Sonneneinstrahlung oder ein Haustier ergeben, das sich unter den Oberflächentemperatursensor legt, auf einfache Art ausfiltern. Um Strom zu sparen, aber auch um zu große Variationen der Wärmezufuhr zu vermeiden, wird nicht jeder Anstieg gleich weitergeleitet. Man kann vielmehr versuchen, einen Mittelwert über eine vorbestimmte Anzahl von Messungen zu bilden und lediglich dann eine Information an die Zonensteuerung 16 zu senden, wenn auch dieser Mittelwert eine Temperaturveränderung zeigt.

## Patentansprüche

1. Raumbeheizungseinrichtung (1) mit einem beheizbaren Fußboden (9), der eine Fußbodenheizeinrichtung (5-7) aufweist, und einem Raumthermostaten (18-20), der einen Raumluftsensor (27) aufweist und mit einer Stelleinrichtung (11, 15, 16) der Fußbodenheizeinrichtung (5-7) verbunden ist, wobei der Raumthermostat (18-20) einen Oberflächentemperatursensor (28) aufweist, der eine Temperatur an der Oberfläche (29) des Fußbodens (9) über einen Abstand hinweg ermittelt, **dadurch gekennzeichnet, dass** der Raumthermostat (18-20) eine Minimal-/Maximalwert-Auswahleinrichtung für die Oberflächentemperatur aufweist, wobei der Raumthermostat (18-20) dem Oberflächentemperatursensor (28) eine höhere Priorität beim Einwirken auf die Stelleinrichtung (11, 15, 16) einräumt als dem Raumluftsensor (27).

2. Einrichtung nach Anspruch 1, **dadurch gekennzeichnet, daß** der Oberflächentemperatursensor (28) als Infrarotsensor ausgebildet ist.

3. Einrichtung nach Anspruch 1 oder 2, **dadurch gekennzeichnet, daß** der Raumthermostat (18-20) leitungslos mit der Stelleinrichtung (11, 15, 16) verbunden ist.

4. Einrichtung nach einem der Ansprüche 1 bis 3, **dadurch gekennzeichnet, dass** der Raumthermostat (18-20) in einer Höhe (A) im Bereich von 1,2 m bis 1,8 m über dem Fußboden (9) angeordnet ist.

5. Einrichtung nach einem der Ansprüche 1 bis 4, **dadurch gekennzeichnet, dass** der Raumthermostat (18-20) in einer Entfernung (b) von maximal 0,3 m von einer Wand (32) angeordnet ist.

6. Einrichtung nach einem der Ansprüche 1 bis 5, **dadurch gekennzeichnet, dass** der Raumthermostat (18-20) die Oberflächentemperatur in zeitlichen Abständen ermittelt.

7. Einrichtung nach Anspruch 6, **dadurch gekennzeichnet, dass** der Raumthermostat (18-20) Werte der Oberflächentemperatur nur dann an die Stelleinrichtung (11, 15, 16) weiterleitet, wenn eine Änderung einen vorbestimmten Wert übersteigt.

8. Einrichtung nach Anspruch 6 oder 7, **dadurch gekennzeichnet, dass** der Raumthermostat (18-20) Werte der Oberflächentemperatur nur dann an die Stelleinrichtung (11, 15, 16) weiterleitet, wenn sich ein Mittelwert der Oberflächentemperatur über einen vorbestimmten Zeitraum um mehr als ein vorbestimmtes Maß ändert.

## Claims

1. Room heating arrangement (1) with a heatable floor (9) that comprises a floor heating arrangement (5-7), and a room thermostat (18-20) that comprises a room air sensor (27) and is connected to an adjustment device (11, 15, 16) of the floor heating arrangement (5-7), the room thermostat (18-20) comprising a surface temperature sensor (28) that measures a temperature at the surface (29) of the floor (9) from a distance, **characterised in that** the room thermostat (18-20) comprises a minimum/maximum value selection device for the surface temperature, the room thermostat (18-20) permitting the surface temperature sensor (28) to have a larger influence on setting the adjustment device (11, 15, 16) than the room air sensor (27).

2. Arrangement (1) according to claim 1, **characterised in that** the surface temperature sensor (28) is made as an infrared sensor.

3. Arrangement (1) according to claim 1 or 2, **characterised in that** the room thermostat (18-20) is wirelessly connected to the adjustment device (11, 15, 16).

4. Arrangement (1) according to one of the claims 1 to 3, **characterised in that** the room thermostat (18-20) is arranged at a height (A) in the range of 1.2 to 1.8 m above the floor (9).

5. Arrangement (1) according to one of the claims 1 to 4, **characterised in that** the room thermostat (18-20) is arranged at a distance (b) of maximally 0.3 m from a wall (32).

6. Arrangement (1) according to one of the claims 1 to 4, **characterised in that** the room thermostat (18-20) measures the surface temperature at certain time intervals.

7. Arrangement (1) according to claim 6, **characterised in that** the room thermostat (18-20) only transfers values of the surface temperature to the adjustment device (11, 15, 16), when a change exceeds a predetermined value.

8. Arrangement (1) according to claim 6, **characterised in that** the room thermostat (18-20) only transfers values of the surface temperature to the adjustment device (11, 15, 16), when, for a predetermined period, a mean value of the surface temperature has changed by more than a predetermined amount.

## Revendications

1. Appareil de chauffage de locaux (1) avec un plancher (9) chauffant, qui présente un dispositif de chauffage de plancher (5-7), et un thermostat de locaux (18-20) qui présente un capteur d'air de locaux (27) et est relié à un dispositif de réglage (11, 15, 16) du dispositif de chauffage de plancher (5-7), sachant que le thermostat de locaux (18-20) présente un capteur de température de surface (28) qui détermine une température à la surface (29) du plancher (9) au-delà d'une distance, **caractérisé en ce que** le thermostat de locaux (18-20) présente un dispositif de sélection de valeur minimale/maximale pour la température de surface, sachant que le thermostat de locaux (18-20) accorde au capteur de température de surface (28) une priorité supérieure à celle du capteur d'air de locaux (27) lors de l'action sur le dispositif de réglage (11, 15, 16).

2. Appareil selon la revendication 1, **caractérisé en ce que** le capteur de température de surface (28) est réalisé comme un capteur infrarouge.

3. Appareil selon la revendication 1 ou 2, **caractérisé en ce que** le thermostat de locaux (18-20) est relié sans fil au dispositif de réglage (11, 15, 16).

4. Appareil selon l'une quelconque des revendications 1 à 3, **caractérisé en ce que** le thermostat de locaux (18-20) est disposé à une hauteur (A) comprise entre 1,2 m et 1,8 m au-dessus du plancher (9).

5. Appareil selon l'une quelconque des revendications 1 à 4, **caractérisé en ce que** le thermostat de locaux (18-20) est disposé à une distance (b) de 0,3 m au maximum d'une paroi (32).

6. Appareil selon l'une quelconque des revendications 1 à 5, **caractérisé en ce que** le thermostat de locaux (18-20) détermine la température de surface dans des intervalles temporels.

7. Appareil selon la revendication 6, **caractérisé en ce que** le thermostat de locaux (18-20) ne transmet des valeurs de température de surface au dispositif de réglage (11, 15, 16) que si une modification dépasse une valeur prédéterminée.

8. Appareil selon la revendication 6 ou 7, **caractérisé en ce que** le thermostat de locaux (18-20) ne transmet des valeurs de température de surface au dispositif de réglage (11, 15, 16) que si une valeur moyenne de la température de surface se modifie de plus d'une grandeur prédéterminée sur une période prédéterminée.
